# EUROPEAN PATENT SPECIFICATION

(11) **EP 3 590 867 B1**
(45) Date of publication and mention of the grant of the patent: **06.10.2021**
(21) Application number: 19184677.3
(22) Date of filing: 05.07.2019
(51) Int. Cl.: B65D 81/02, B65B 23/20, B65D 85/48

(54) **METHOD FOR PACKING A PRE-ASSEMBLED PRODUCT FOR USE AT A ROOF AND PACKAGING UNIT FOR SUCH A PRODUCT COMPRISING A FIRST AND SECOND PACKING**
VERFAHREN ZUM VERPACKEN EINES VORMONTIERTEN PRODUKTS ZUR VERWENDUNG AN EINEM DACH UND VERPACKUNGSEINHEIT FÜR EIN SOLCHES PRODUKT MIT EINER ERSTEN UND ZWEITEN VERPACKUNG
PROCÉDÉ D'EMBALLAGE D'UN PRODUIT PRE-ASSEMBLÉ À UTILISER SUR UN TOIT ET UNITÉ D'EMBALLAGE POUR UN TEL PRODUIT COMPRENANT UN PREMIER ET SECOND EMBALLAGE

(30) Priority: 05.07.2018 DK PA201870464
(43) Date of publication of application: 08.01.2020
(73) Proprietor: VKR Holding A/S, 2970 Hørsholm (DK)
(72) Inventor: KAPER, Günther, 2970 Hørsholm (DK)
(74) Representative: AWA Denmark A/S

(56) References cited:
- EP-A1- 1 787 801
- EP-B1- 1 651 543
- WO-A1-2010/087550
- WO-A1-2013/050041
- DE-A1-102016 114 011
- US-A- 3 344 917
- US-A- 5 040 696
- US-A1- 2013 140 213

## Description

### Technical Field

The present invention relates to method for packing a pre-assembled product for use at a roof in a packaging unit. The invention furthermore relates to a packaging unit comprising a second packaging.

### Background Art

Once a product for use at a roof such as a roof window, a flat roof window, a skylight, a roller shutter or similar building product is assembled, the final product is typically packed in a cardboard packaging and stored in an upright position ready for shipment. Such a packaging is known from e.g. the Applicant's earlier applications DK PA 2015 70503 (DE 102016114011 A1), registered as DK patent No. 178 921, and WO 2013/050041 A1. Such cardboard packages are traditionally designed as flat rectangular box-shaped carton packages and are known in many different designs. In many applications the products to be handled are of a substantial size, e.g. building products having a length, width and height of 60-180 cm × 50-120 cm × 10-20 cm and weights ranging between 40 and 100 kg, or heavier. In order to secure a sufficient strength to the package for the protection of such a building product during handling of the package, including transportation and storage, it is often necessary to stiffen or reinforce the package in various ways, e.g. adding inner packaging elements or increasing the wall thickness of the carton. This, however, increases the weight and becomes more expensive. Most often, shipments are large enough so that several packed products for use at a roofs are juxtaposed and hence handled jointly when crane-loaded and unloaded together. This juxtaposing contributes to each product and each packaging not being damaged during shipment. EP 1651543 B1 describes the packaging of a pre-assembled product.

In rarer situations, shipment size consists of only one or two units. In these cases, a more robust packaging is required to ensure safe delivery of the few units at destination, given the lack of the juxtaposing effect. Small drop-sizes, especially, generate high costs in the event of incurring damages because of the low income to shipping cost ratio compared to large drop-sizes. However, more robust packaging brings its own disadvantages, since additional recourses need to be allocated to estimate how many products for use at a roofs should be packaged in an alternative packaging. In addition to the direct increased labour costs, such an approach inevitably leads to decrease in profitability when said estimates are erroneous and when the cost of implementation of new production lines is taken into account.

When only few units are to be handled, handling is typically done by hand, since mechanical handling becomes cumbersome and costly. When handled by hand, however, the risk of items being dropped, stepped on or otherwise handled incautiously increases and therefore so does the risk of packaging and products incurring damages.

An additional concern is package size, since even a slight increase in thickness of each individual packaged unit results in a great increase in the shelf space requirement before and after shipment. The space occupied by the unused packaging is also a concern for the same reasons.

Honeycomb and other composite constructions such as waffle, cell and corrugated constructions of paper or cardboard are known to be relatively compact, lightweight and resistant to compression and torsion forces from for example DE 10 2007 021 520 A1. Here the honeycomb construction is made of paper or another material and filled with a plastic foam. Thus, recyclability is diminished, because this composite element must be separated into its individual parts to be disposed of correctly. As a result, recycling costs rise and negatively impact a company's profitability. DE 10 2015 109 972 A1 describes a composite packaging sheet with an expanded honeycomb core structure, which is covered with an upper and/or a lower corrugated cardboard sheets. The connected honeycomb core and corrugated cardboard sheet structure confers high strength and rigidity to the sheet. WO 2014/ 048544 A1 relates to edge protection for edge-sensitive transported goods consisting of a yieldable material, such as foam-plastic, and a reinforcement layer, such as wood, making construction of this solution complicated and therefore expensive. Honeycomb inserts made of cardboard or cardboard/corrugated board are contemplated to prevent scratching of the outer surfaces of transported goods such as glass. DE 20 2016 002 903 U1 describes a folding card-board/honeycomb blank for forming a transport container adapted for receiving a push-through end portion of a loading pallet. US 5 605 229 and EP 0 164 631 A2 contribute similar solutions. Other honeycomb constructions are for instance described in US 3344917 A, US 5040696 A, US 2013/140213 A, EP 1787801 A1 and WO 2010/087550 A1.

### Summary of Invention

It is therefore the object of the invention to provide a method for packing a pre-assembled and pre-packed product for use at a roof in removable second packaging means, said method permitting time efficient packing. It is also the object of the invention to provide a packing method of a pre-packed product for use at a roof that will result in light-weight, effective and durable protection means. Yet another object of the invention is to provide a second packaging that is cost-efficient to manufacture, space-efficient to store and cost-efficient to recycle.

In a first aspect, at least one of the afore-mentioned objects is met by a method for packing a pre-assembled product for use at a roof in a packaging unit comprising the steps of:
providing a pre-assembled product pre-packed in a first packaging with at least a first packaging edge and a second packaging edge,
providing a second packaging comprising at least one packaging sheet having at least a first grove and a second groove on at least one of its sides, said first groove and said second groove being located on the opposite side to the first packaging arranged to allow for folding of the packaging sheet around said first packaging edge and said second packaging edge, wherein each packaging sheet comprises at least one inner core layer of paper, cardboard or polymer with a honeycomb, waffle or corrugated construction, and at least one outer cover sheet,
folding said packaging sheet around the first packing edge and the second packing edge of said first packaging, and
fixing said second packaging to said first packaging.

By said method being carried out with a packaging sheet having a groove on at least one of its sides, the folding of the packaging sheet around said a packaging edge may be facilitated. The groove provides a weakened line along the length of the packaging sheet, which enables precise and easy folding of the packaging sheet so that two sides of the first packaging are efficiently contacted by the packaging sheet during packing. By "precise" it is meant that deviations of the fold are avoided by the groove, which predetermines the location of the fold, thus resulting in a straight fold line even if folding is attempted in inadequate positioning.

The groove may be arranged prior to use e.g. during manufacture. Such a groove may be cut out on the production line in an automated fashion that would result in a foldable packaging sheet end portion of sufficient length to effectively protect the side of the first packaging and remain in the folded position. In other embodiments, cutting of the groove is done manually prior to carrying out the method. In such cases, it is advantageous to include an indication of where the cut is to be performed, this being achieved by providing a marking e.g. in the form of a printed cutting-guide line.

By fixing the packaging sheet to the first packaging, positioning of the packaging sheet is best guaranteed. In a preferred embodiment, fixing is carried out by the use of appropriate tethering means such as pallet straps or tensioning straps. In another embodiment, the method of the invention is carried out by performing the steps of folding and fixing simultaneously. In such an embodiment, an adhesive layer, preferably including a release layer, is included on the outer surface of the outer cover layer. In this manner, the user can simultaneously fold and fix the packaging sheet on to the first packaging, thereby saving time.

Following packing the product in the packaging unit, the entire packaging unit may be handled and transported with a significantly lowered risk of damage to the pre-packed product. The second packaging acts as a kind of dust jacket, thus protecting not only the product, but also the first packaging. At the destination, the second packaging is easily removed and the first packaging with the pre-packed product will appear in undamaged and fresh condition. In this way, the product placed in the first packaging may even be placed on exposition.

In an embodiment, the method further comprises the step of providing an incision in said packaging sheet arranged opposite an existing incision in said first packaging. By said incision in the packaging sheet, the functionality of the incision in the first packaging is maintained e.g. where the incisions are meant to provide attachment and lifting means. Such lifting means may be e.g. holes in which hands or devices for assisting in lifting may be inserted. Such incisions may be e.g. punch outs ready to be removed for the provision of said lifting means. With the additional surface created within said lifting means, lifting pressure is spread and more easily dissipated, thus making it safer, easier and more comfortable for the user.

In another embodiment, the method further comprises the step of providing graphic design on said packaging sheet. By providing graphic design on the packaging sheet, important information can be immediately available to the user of the second packaging. Such information can be vital to the outcome of handling during transit. This is particularly relevant in the case of small drop-sizes, which are most commonly handled by hand and on a one-by-one basis. Said graphic design includes stickers, which may be appended after manufacture, and direct printing on the packaging sheet outer surface. Also considered to be graphic design is the provision of a cutting-guide marking for assisting in cutting a groove manually if not provided during manufacture. A pre-arranged groove may also be outlined by a marking to draw the user's attention to the purpose and location of the groove.

In a presently preferred embodiment, the steps of providing the second packaging, folding the packaging sheet or sheets, and fixing the second packaging to the first packaging is carried out on a support structure comprising a substrate, and a set of ribs with at least one recess. In this way, performing the packaging operation is facilitated to a great extent.

In a preferred further development of the above embodiment, the one packaging sheet is first placed on the set of ribs, the product packaged in the first packaging is then placed on the one packaging sheet, following which the other packaging sheet is placed on a top face of the first packaging. Subsequently, the end portions are folded around respective edges of the first packaging, and tethering means in the form of straps are guided through the at least one recess in the ribs and wrapped around the packaging unit.

Most products for use at a roof, typically a roof window, come in different sizes. The need for support during folding and subsequent fixing by tethering or strapping may hence vary, but typically, two straps are utilised, placed at some distance from the end of the packaging unit comprising the second packaging and the first packaging with the pre-packed product. In a further development of the above embodiment, the set of ribs comprises two ribs, each rib being provided with a first recess and a second recess, and an abutment plate is provided at ends of the two ribs, the first and second recesses being provided at pre-defined distances from the abutment plate. The two ribs provide sufficient support during the procedure of folding and fixing, while the provision of recesses at pre-defined locations ensures that the straps are positioned correctly and uniformly.

In order to accommodate a broad range of product sizes, it is advantageous that a plurality of sets of ribs with various lengths is provided to accommodate a range of sizes of the product, and wherein the straps are preferably also provided in various lengths.

In a second aspect of the invention, a packaging unit for a pre-assembled product for use at a roof is provided. The packaging unit comprises a first packaging having at least a first packaging edge and a second packaging edge, and enclosing the product and a second packaging enclosing the first packaging, characterised in that the second packaging comprises at least one packaging sheet having at least a first grove and a second groove on at least one of its sides, said first groove and said second groove being located on the opposite side to the first packaging arranged to allow for folding of the packaging sheet around said first packaging edge and said second packaging edge of the first packaging, wherein each packaging sheet comprises at least one inner core layer of paper, cardboard or polymer with a honeycomb, waffle or corrugated construction, and at least one outer cover sheet.

. In this way, a simple and reliable solution has been found to protect the product pre-paced in the first packaging to a larger extent. By the term "enclosing", at least partial enclosure is foreseen. Typically, the first packaging encloses the pre-assembled and pre-packed product more or less completely, with the exception of possible inspection windows, incisions for forming handle portions etc., whereas the enclosure of the second packaging on the first packaging may instead be partial, for instance leaving end sections open.

In one embodiment, each packaging sheet of the second packaging comprises a continuous, single-element sheet able to cover a surface larger than the first packaging, two grooves being preferably provided on each packaging sheet to provide two end portions. This embodiment provides for a very simple packaging procedure. It is to be understood that the extension of the packaging sheet or sheets of the second packaging is chosen such that sufficient protection of the first packaging with the pre-paced product is provided. For instance, edge portions of the second packaging may extend beyond the contours of the first packaging to form leg-like shields.

In a presently preferred embodiment, each packaging sheet comprises at least one of paper, cardboard or polymer with a honeycomb, waffle or corrugated construction. The choice of material is carried out in dependence of a number of parameters, including transport form and extent, multiple handling and re-stocking instances, weight and dimensions of product and first packaging, value etc.

In a preferred further development, each packaging sheet comprises at least one inner core layer made with said honeycomb, waffle or corrugated construction and at least one outer cover sheet. Preferably, each packaging sheet also comprises at least one adhesive layer. The provision of a honeycomb, waffle or corrugated construction makes it possible to add substantial strength, while still being lightweight, and have excellent anticompression strength in the direction of board thickness, tensile, bending and torsional strength. A particularly solid solution has been found with a packaging sheet of honeycomb of a weight of 200 g/m², a combined thickness of 20 mm and honeycomb thickness of 15 mm.

In another presently preferred embodiment, the packaging unit comprises a first packaging with a pre-assembled and pre-packed product, a second packaging comprising one and another packaging sheet, each with two opposed end portions, the one packaging sheet being positioned at one face of the first packaging and the other packaging sheet being positioned at an opposite face of the first packaging, the end portions being folded around respective edges such that respective end portions of one and the other packaging sheet are positioned at a mutual face of the first packaging, and wherein tethering means, preferably two straps, are wrapped around the packaging unit According to a preferred embodiment, said second packaging sheet comprises at least one of paper, cardboard, or polymer with a honeycomb, waffle or corrugated construction.

Other features and advantages will appear from the subsequent description of embodiments.

### Brief Description of Drawings

In the following the invention will be described in more detail with reference to the drawings, where:
Fig. 1 is an exploded perspective view showing two possible sandwich constructions of a packaging sheet of a second packaging of an embodiment of a packaging unit according to the invention;
Fig. 2 is a section of a packaging sheet arranged on a first packaging before folding;
Fig. 3 is a perspective view of a packaging sheet arranged on a first packaging after folding of the packaging sheet along the groove;
Fig. 4 is a sectional view showing a first packaging packed in a second packaging comprising two packaging sheets folded around the first packaging edges in an embodiment of the invention;
Fig. 5 is an isometric view of a support structure for use in the
method; and

Figs 6 to 10 are views corresponding to Fig. 5 of various stages during the method for packaging.

### Description of Embodiments

In the following, embodiments of a packaging unit 1 comprising a second packaging 2 and a first packaging 3 enclosing a pre-assembled and pre-packed product 4 will be described. Specifically, the product 4 is intended to be used at a roof, more specifically, the product 4 comprises a roof window.

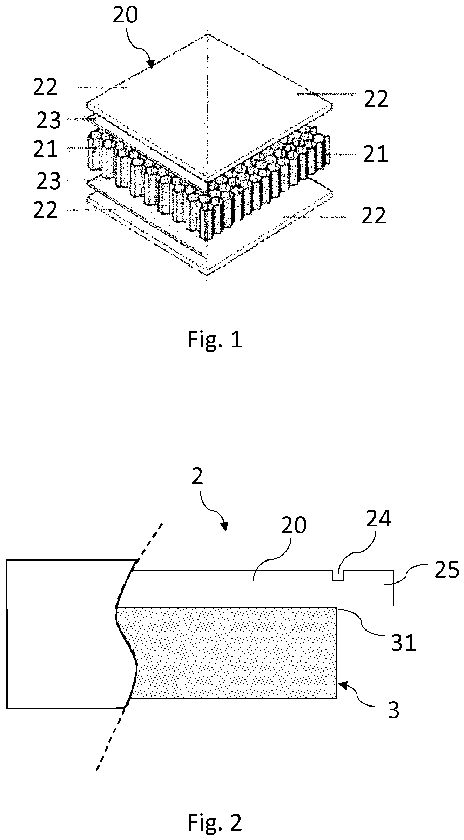

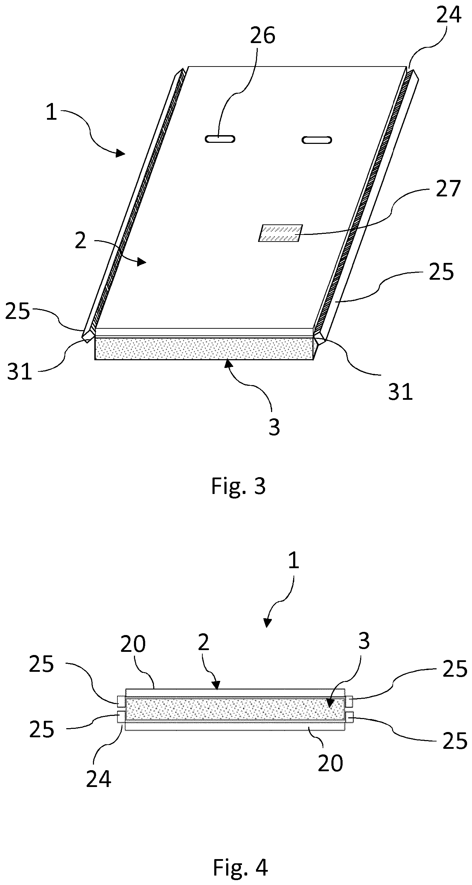

Referring initially to Figs 2 and 3, the general configuration of the second packaging 1 which is arranged to fold around edges 31 of a first packaging 3 is shown. In the embodiment shown, the second packaging 2 comprises at least one packaging sheet generally designated 20. In the embodiment shown, the packaging sheet 20 is a continuous, single-element sheet comprising an end portion 25 at a respective, opposite edge portion of the sheet and has two grooves 24, on one of its sides arranged to allow for folding of the packaging sheet 2 around the edges 31 of the first packaging 3. The respective grooves 24 are located on the opposite side to the first packaging 3 and separates the portion of the packaging sheet 20 overlapping the first packaging 3 from the end portions 25. The grooves 24 are close to edges of the packaging sheet 20, as shown in Fig. 2, and run essentially parallel to these. Prior to folding, the grooves 24 are ideally aligned with the edges 31 of the first packaging 31 so that the end portions 25 of the packaging sheet 2 may be easily folded over the edges 31 by pressing them against the edges 31. As a result, the end portions 25 will lie against a second side or face of first packaging 3 while covering the edges 31, as shown in Fig. 4, a0nd which will be described in further detail below.

To ensure a good functionality of the invention and protection of the first packaging 3 from all directions, two packaging sheets 2 are used to cover two opposite sides and four corresponding edges of the first packaging 3, as also shown in Fig. 4, and as will be described in further detail below.

With alignment and folding having been carried out, the second packaging 2 is fixed to the first packaging 3 to ensure that the packaging sheet 2 and the end portion 25 stay in their intended position (not shown). Fixing may be carried out by any tethering means deemed appropriate for securing said second packaging onto the first packaging in a removable fashion, such as by using pallet straps, cords, foil, shrinking foil or other means. By "pallet straps" it is understood straps typical to the packaging industry, which may be made of steel, polypropylene, polyester, nylon, woven textile, paper, or any material or composite material deemed appropriate. Tension strength of said tethering means should be carefully adjusted to provide a satisfactory subjection without excessively penetrating the folded second packaging 2 and damaging the first packaging 3. It is evident to the person skilled in the art that this can be achieved routinely with standard packaging atomization machinery.

In another embodiment, securing said second packaging to said first packaging is contemplated being carried out with the use of a weak adhesive. Such an adhesive should adhere with much greater strength to the underside of the packaging sheet 2 than it does to the first packaging 3, so that the adhesive remains attached to packaging sheet 2 when removing the second packaging 2 from the first packaging 3. Thus, a two-sided adhesive layer with different adhesive strengths on each side is contemplated. When such an adhesive is used, the steps of folding and fixing are carried out simultaneously, since no additional fixing means are to be applied.

In the embodiment shown in Fig. 3, the shape and location of incisions 26 in the packaging sheet 20 are arranged to coincide with existing incisions 36 in said first packaging 3. The incisions 26 in the packaging sheet 2, and in the first packaging 3, are configured to form apertures to e.g. provide holes for lifting by hand or by machine. Alternatively, an incision 26 of any appropriate size and shape may be performed according to need. In such cases, providing incisions of such a magnitude that the integrity of the packaging sheet 20 may be compromised should be avoided.

A reinforcing layer, such as a layer made of e.g. a fibrous adhesive layer, may be used to line the incisions.

Also in the embodiment shown in Fig. 3, graphic design 27 is provided to convey information to the user. The graphic design 27 depicted in Fig. 3 is in the form of a sticker, but other methods, such as direct printing on the packaging sheet 2, are also contemplated. The graphic design 27 may for instance be in the form of recognised symbols for fragile products, such as a glass icon.

Turning now to Fig. 1, the packaging sheet 20 in the embodiment shown of the second packaging 2 of the packaging unit 1 comprises a honeycomb construction 21 forming the inner core layer. Honeycomb and corrugated constructions are formed by strips of paper of cardboard or polymer folded and laid on their side, in such a way that they delimitate square, hexagonal or undulating cells, or other types of cells, with a depth dimension essentially perpendicular to the plane of the sheet. Waffle construction is achieved by introducing regular protrusions and subductions in the inner core layer. These constructions all offer good compression, torsion, shear and tensile forces to weight and volume ratios, thus being ideal materials for the packaging sheet 20.

Still referring to Fig.1, the inner core layer 21 is covered by two outer cover layers 22. These are adhered to the inner core layer 21 and contribute to the overall strength of the packaging sheet 2.

Referring now more specifically to the left-hand portion of Fig. 1:
Where additional resistance is desired, one or two additional adhesive layers 23 may be included between the inner core layer 21 and the outer cover sheets 22.

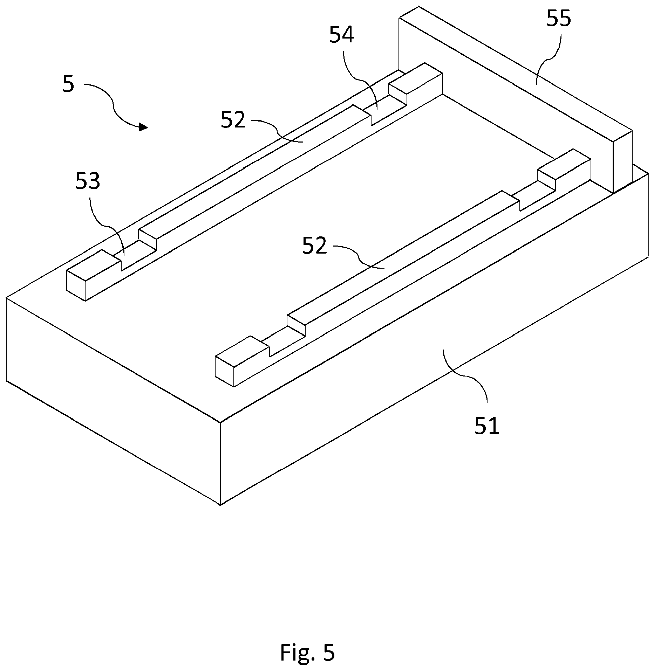

One exemplary method of providing a packaging unit 1 according to the invention will be described in some detail below, referring to Figs 5 to 10:
Initially, the packaging sheets 20 of the second packaging 2 are provided, for instance according to one of the embodiments described in the above.

Here, the steps of folding the packaging sheet sheets 20, and fixing the second packaging 2 to the first packaging 3 is carried out on a support structure 5 comprising a substrate 51, and a set of ribs 52 with a first recess 53 and a second recess 54. In the embodiment shown, an abutment plate 55 at the ends of the set of ribs 52 is provided as well. The ribs 52 may be temporarily fastened to the substrate 51 if considered convenient, for instance by guides or releasable fastening means (not shown). The support structure may for instance be in the form of an elevating table. Auxiliary hoists and craning facilities may be provided, now shown however.

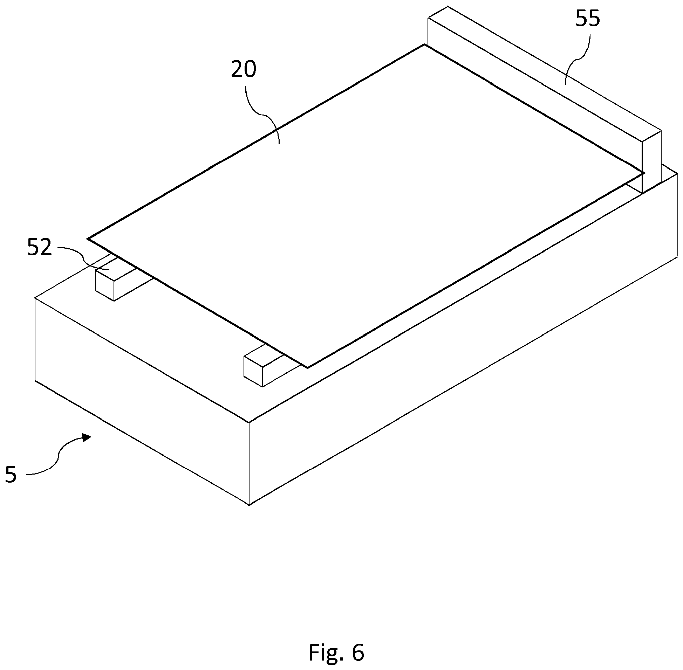

First, the one packaging sheet 20 is placed on the set of ribs 52 as shown in Fig. 6 and the position adjusted such that one edge abuts the abutment plate 55 and the side edges protrude sideways beyond the ribs 52.

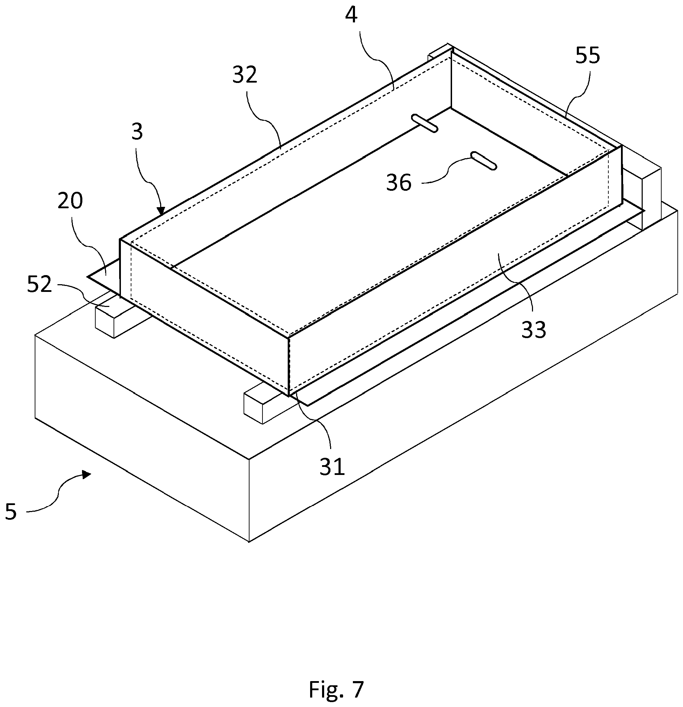

Then, the product 4 (shown in dashed lines) packaged in the first packaging 3 is placed on the one packaging sheet 20 and adjusted to attain the position shown in Fig. 7. In this position, the product 4 in the first packaging 3 is supported by the ribs 52 and in turn on the substrate 51 of the support structure 5.

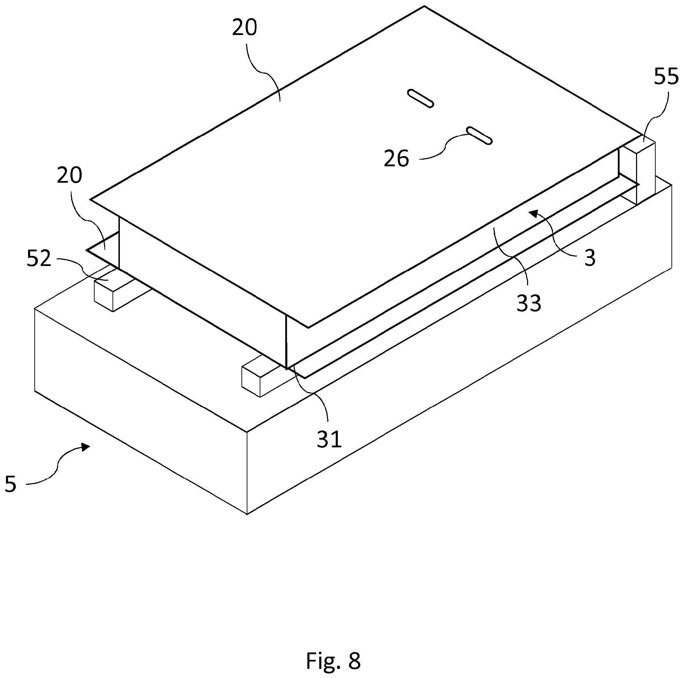

Subsequently, the other packaging sheet 20 is placed on a top face 32 of the first packaging 3 as shown in Fig. 8. In the embodiment shown, the abutment plate 55 has such a height that the other packaging sheet 20 on top of the first packaging 3 raises above; however, it is of course also possible to provide the abutment plate 55 with such a height that the other packaging sheet 20 is also abutted against the abutment plate 55.

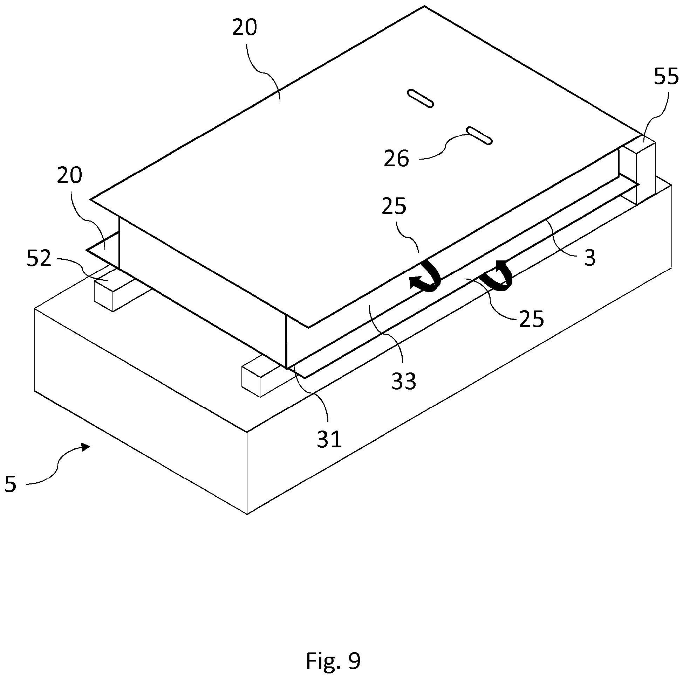

Turning now to Fig. 9, the end portions 25 of the one and the other packaging sheets 20 are folded around respective edges 31 of the first packaging 3. This is carried out such that opposing end portions 25 of the two packing sheets 20 are folded onto a mutual face, here a side face 33 of the first packaging 3.

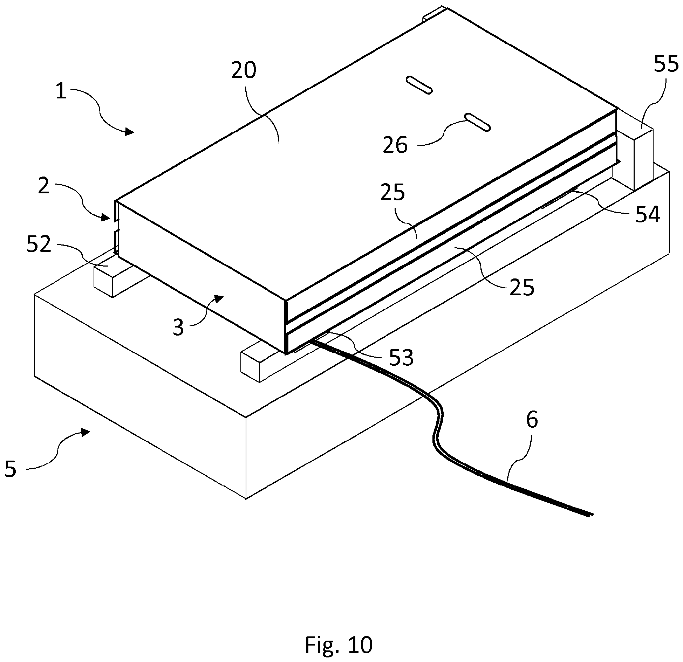

Finally, and as shown in Fig. 10, tethering means in the form of straps 6 are guided through the recesses 53, 54 in the ribs 52 and wrapped around the packaging unit.

The packaging unit 1 is now ready for further handling and transport to its destination.

In this regard, the first and second recesses 53, 54 are as indicated provided at pre-defined distances from the abutment plate 55 to ensure correct positioning of the straps 6.

On a packing site accommodating products of various sizes, a plurality of sets of ribs 52 with various lengths may be provided to accommodate a range of sizes of the product 4. Correspondingly, also the straps 6 provided in various lengths to save on material and time efficiency, rather than providing straps of only one length to fit all, which then needs to be cut and discarded.

### List of reference numerals

- 1: packaging unit
- 2: second packaging
20 second packaging sheet
21 inner core layer
22 outer cover layer
23 adhesive layer
24 groove
25 end portion
26 second packaging sheet incision
27 graphic design
- 3: first packaging
31 first packaging edge
32 top face
33 side face
36 first packaging incision
- 4: product
- 5: support structure
51 substrate
52 rib
53 first recess
54 second recess
55 abutment plate
- 6: strap

## Claims

1. A method for packing a pre-assembled product (4) for use at a roof in a packaging unit (1), said method comprising the steps of:
providing a pre-assembled product (4) pre-packed in a first packaging (3) with at least a first packaging edge (31) and a second packaging edge (31),
providing a second packaging (2) comprising at least one packaging sheet (20) having at least a first grove (24) and a second groove (24) on at least one of its sides, said first groove (24) and said second groove (24) being located on the opposite side to the first packaging (3) arranged to allow for folding of the packaging sheet (20) around said first packaging edge (31) and said second packaging edge (31), wherein each packaging sheet (20) comprises at least one inner core layer of paper, cardboard or polymer with a honeycomb, waffle or corrugated construction (21), and at least one outer cover sheet (22),
folding said packaging sheet (20) around the first packing edge (31) and the second packing edge (31) of said first packaging (3), and
fixing said second packaging (2) to said first packaging (3).

2. The method according to claim 1, further comprising the step of providing an incision (26) in said packaging sheet (20) arranged opposite an existing incision (36) in said first packaging (3).

3. The method according to any one of claims 1 or 2, further comprising the step of providing graphic design (27) on said packaging sheet (20).

4. The method according to any one of the preceding claims, wherein the steps of folding and fixing are carried out simultaneously.

5. The method according to any one of the preceding claims, wherein the step of providing the second packaging (2) comprises providing one packaging sheet (20) with at least one end portion (25) at one face of the first packaging (3) and another packaging sheet (20) with at least one end portion (25) on an opposite face (32) of the first packaging (3), and wherein the step of folding the packaging sheets (20) comprises folding the respective end portion (25) of the packaging sheet (20) around the edge (31) of the first packaging (3) such that the end portions (25) of the one and the other packaging sheets (20) are positioned at a mutual face (33) of the first packaging (3).

6. The method according to any one of the preceding claims, wherein the step of fixing comprises tethering by wrapping tethering means (6) around the packaging unit (1) provided by the second packaging (2) and the first packaging (3) enclosing the product (4).

7. The method according to any one of the preceding claims, wherein at least some of the steps of providing the second packaging (2), folding the packaging sheet or sheets (20), and fixing the second packaging (2) to the first packaging (3) is carried out on a support structure (5) comprising a substrate (51), and a set of ribs (52) with at least one recess (53, 54), preferably also comprising an abutment plate (55).

8. The method of claim 7 when dependent on claims 5 and 6, wherein the one packaging sheet (20) is placed on the set of ribs (52), the product (4) packaged in the first packaging (3) is placed on the one packaging sheet (20), the other packaging sheet (20) is placed on a top face (32) of the first packaging (3), the end portions (25) are folded around respective edges (31) of the first packaging (3), and tethering means in the form of straps (6) are guided through the at least one recess (53, 54) in the ribs (52) and wrapped around the packaging unit.

9. The method of claim 8, wherein the set of ribs comprises two ribs (52), each rib (52) being provided with a first recess (53) and a second recess (54), and an abutment plate (55) is provided at ends of the two ribs (52), the first and second recesses (53, 54) being provided at pre-defined distances from the abutment plate (55).

10. The method of claim 9, wherein a plurality of sets of ribs (52) with various lengths is provided to accommodate a range of sizes of the product (4), and wherein the straps (6) are preferably also provided in various lengths.

11. A packaging unit (1) for a pre-assembled product (4) for use at a roof, comprising a first packaging (3) having at least a first packaging edge (31) and a second packaging edge (31), and enclosing the product (4) and a second packaging (2) enclosing the first packaging (3), **characterised in that** the second packaging (2) comprises at least one packaging sheet (20) having at least a first grove (24) and a second groove (24) on at least one of its sides, said first groove (24) and said second groove (24) being located on the opposite side to the first packaging (3) arranged to allow for folding of the packaging sheet (20) around said first packaging edge (31) and said second packaging edge (31) of the first packaging (3), wherein each packaging sheet (20) comprises at least one inner core layer of paper, cardboard or polymer with a honeycomb, waffle or corrugated construction (21), and at least one outer cover sheet (22).

12. A packaging unit (1) according to claim 11, wherein each packaging sheet (20) of the second packaging (2) comprises a continuous, single-element sheet able to cover a surface larger than the first packaging (3), two grooves (24) being preferably provided on each packaging sheet to provide two end portions (25).

13. A packaging unit (1) according to claim 11 or 12, wherein each packaging sheet (20) comprises at least one adhesive layer (23).

14. A packaging unit (1) according to any one of claims 11 to 13, comprising a first packaging (1) with a pre-assembled and pre-packed product, a second packaging (2) comprising one and another packaging sheet (20), each with two opposed end portions (25), the one packaging sheet (20) being positioned at one face of the first packaging (3) and the other packaging sheet (20) being positioned at an opposite face of the first packaging (3), the end portions (25) being folded around respective edges (31) such that respective end portions (25) of one and the other packaging sheet (20) are positioned at a mutual face (33) of the first packaging (3), and wherein tethering means (6), preferably two straps (6), are wrapped around the packaging unit (1).

## Patentansprüche

1. Verfahren zum Verpacken eines vormontierten Produkts (4) zur Verwendung an einem Dach in einer Verpackungseinheit (1), wobei das Verfahren die folgenden Schritte umfasst:
Vorsehen eines vormontierten Produkts (4), das in einer ersten Verpackung (3) vorverpackt ist, mit mindestens einer ersten Verpackungskante (31) und einer zweiten Verpackungskante (31),
Vorsehen einer zweiten Verpackung (2), die mindestens eine Verpackungsbahn (20) umfasst, die mindestens eine erste Nut (24) und eine zweite Nut (24) auf mindestens einer ihrer Seiten aufweist, wobei sich die erste Nut (24) und die zweite Nut (24) auf der entgegengesetzten Seite zur ersten Verpackung (3) befinden und dazu angeordnet sind, das Falten der Verpackungsbahn (20) um die erste Verpackungskante (31) und die zweite Verpackungskante (31) zuzulassen, wobei jede Verpackungsbahn (20) mindestens eine innere Kernschicht aus Papier, Karton oder Polymer mit einer Waben-, Waffel- oder Wellenkonstruktion (21) und mindestens eine äußere Abdeckbahn (22) umfasst,
Falten der Verpackungsbahn (20) um die erste Verpackungskante (31) und die zweite Verpackungskante (31) der ersten Verpackung (3) und
Fixieren der zweiten Verpackung (2) an der ersten Verpackung (3).

2. Verfahren nach Anspruch 1, ferner den Schritt des Vorsehens eines Einschnitts (26) in der Verpackungsbahn (20) umfassend, der einem bestehenden Einschnitt (36) in der ersten Verpackung (3) entgegengesetzt ist.

3. Verfahren nach einem der Ansprüche 1 oder 2, ferner den Schritt des Vorsehens eines Grafikdesigns (27) auf der Verpackungsbahn (20) umfassend.

4. Verfahren nach einem der vorstehenden Ansprüche, wobei die Schnitte des Faltens und Fixierens gleichzeitig ausgeführt werden.

5. Verfahren nach einem der vorstehenden Ansprüche, wobei der Schritt des Vorsehens der zweiten Verpackung (2) das Vorsehen einer Verpackungsbahn (20) mit mindestens einem Endabschnitt (25) an einer Fläche der ersten Verpackung (3) und einer weiteren Verpackungsbahn (20) mit mindestens einem Endabschnitt (25) auf einer entgegengesetzten Fläche (32) der ersten Verpackung (3) umfasst und wobei der Schritt des Faltens der Verpackungsbahnen (20) das Falten des jeweiligen Endabschnitts (25) der Verpackungsbahn (20) um die Kante (31) der ersten Verpackung (3), sodass die Endabschnitte (25) der einen und der weiteren Verpackungsbahn (20) an einer gemeinsamen Fläche (33) der ersten Verpackung (3) angeordnet sind, umfasst.

6. Verfahren nach einem der vorstehenden Ansprüche, wobei der Schritt des Fixierens das Binden durch das Wickeln von Bindeeinrichtungen (6) um die Verpackungseinheit (1), die durch die zweite Verpackung (2) und die das Produkt (4) umschließende erste Verpackung (3) vorgesehen ist, umfasst.

7. Verfahren nach einem der vorstehenden Ansprüche, wobei zumindest einige der Schritte des Vorsehens der zweiten Verpackung (2), des Faltens der Verpackungsbahn oder -bahnen (20) und des Fixierens der zweiten Verpackung (2) an der ersten Verpackung (3) auf einer Trägerstruktur (5) ausgeführt werden, die einen Untergrund (51) und einen Satz Rippen (52) mit mindestens einer Aussparung (53, 54) umfasst und vorzugsweise außerdem eine Anschlagplatte (55) umfasst.

8. Verfahren nach Anspruch 7, wenn abhängig von Anspruch 5 und 6, wobei die eine Verpackungsbahn (20) auf dem Satz Rippen (52) angeordnet ist, wobei das in der ersten Verpackung (3) verpackte Produkt (4) auf der einen Verpackungsbahn (20) platziert wird, die weitere Verpackungsbahn (20) auf einer Deckfläche (32) der ersten Verpackung (3) platziert wird, die Endabschnitte (25) um die jeweiligen Kanten (31) der ersten Verpackung (3) gefaltet werden und die Bindeeinrichtungen in Form von Gurten (6) durch die mindestens eine Aussparung (53, 54) in den Rippen (52) geführt und um die Verpackungseinheit gewickelt werden.

9. Verfahren nach Anspruch 8, wobei der Satz Rippen zwei Rippen (52) umfasst, wobei jede Rippe (52) mit einer ersten Aussparung (53) und einer zweiten Aussparung (54) versehen ist und eine Anschlagplatte (55) an den Enden der zwei Rippen (52) vorgesehen ist, wobei die erste und zweite Aussparung (53, 54) in festgelegten Abständen von der Anschlagplatte (55) vorgesehen sind.

10. Verfahren nach Anspruch 9, wobei mehrere Sätze Rippen (52) mit verschiedenen Längen dazu vorgesehen sind, mehrere Größen des Produkts (4) aufzunehmen, und wobei die Gurte (6) vorzugsweise ebenfalls in verschiedenen Längen vorgesehen sind.

11. Verpackungseinheit (1) für ein vormontiertes Produkt (4) zur Verwendung an einem Dach, eine erste Verpackung (3), die mindestens eine erste Verpackungskante (31) und eine zweite Verpackungskante (31) aufweist und das Produkt (4) umschließt, und eine zweite Verpackung (2), die die erste Verpackung (3) umschließt, umfassend, **dadurch gekennzeichnet, dass** die zweite Verpackung (2) mindestens eine Verpackungsbahn (20) umfasst, die mindestens eine erste Nut (24) und eine zweite Nut (24) auf mindestens einer ihrer Seiten aufweist, wobei sich die erste Nut (24) und die zweite Nut (24) auf der entgegengesetzten Seite zur ersten Verpackung (3) befinden und dazu angeordnet sind, das Falten der Verpackungsbahn (20) um die erste Verpackungskante (31) und die zweite Verpackungskante (31) der ersten Verpackung (3) zuzulassen, wobei jede Verpackungsbahn (20) mindestens eine innere Kernschicht aus Papier, Karton oder Polymer mit einer Waben-, Waffel- oder Wellenkonstruktion (21) und mindestens eine äußere Abdeckbahn (22) umfasst.

12. Verpackungseinheit (1) nach Anspruch 11, wobei jede Verpackungsbahn (20) der zweiten Verpackung (2) eine durchgehende einteilige Bahn umfasst, die eine Fläche bedecken kann, die größer als die erste Verpackung (3) ist, wobei zwei Nuten (24) vorzugsweise auf jeder Verpackungsbahn vorgesehen sind, um zwei Endabschnitte (25) vorzusehen.

13. Verpackungseinheit (1) nach Anspruch 11 oder 12, wobei jede Verpackungsbahn (20) mindestens eine Klebstoffschicht (23) umfasst.

14. Verpackungseinheit (1) nach einem der Ansprüche 11 bis 13, eine erste Verpackung (1) mit einem vormontierten und vorverpackten Produkt, eine zweite Verpackung (2), die eine und eine weitere Verpackungsbahn (20) mit jeweils zwei entgegengesetzten Endabschnitten (25) umfasst, wobei die eine Verpackungsbahn (20) auf einer Fläche der ersten Verpackung (3) angeordnet ist und die weitere Verpackungsbahn (20) an einer entgegengesetzten Fläche der ersten Verpackung (3) angeordnet ist, wobei die Endabschnitte (25) derart um die jeweiligen Kanten (31) gefaltet werden, dass die jeweiligen Endabschnitte (25) der einen und der weiteren Verpackungsbahn (20) an einer gemeinsamen Fläche (33) der ersten Verpackung (3) angeordnet sind, umfassend, und wobei Bindeeinrichtungen (6), vorzugsweise zwei Gurte (6) um die Verpackungseinheit (1) gewickelt sind.

## Revendications

1. Procédé pour emballer un produit préassemblé (4), pour l'utilisation au niveau d'un toit, dans une unité d'emballage (1), ledit procédé comprenant les étapes de :
la fourniture d'un produit préassemblé (4) pré-emballé dans un premier emballage (3) avec au moins un premier bord d'emballage (31) et un second bord d'emballage (31),
la fourniture d'un second emballage (2) comprenant au moins une feuille d'emballage (20) ayant au moins une première rainure (24) et une seconde rainure (24) sur au moins un de ses côtés, ladite première rainure (24) et ladite seconde rainure (24) étant situées sur le côté opposé au premier emballage (3), agencées pour permettre le pliage de la feuille d'emballage (20) autour dudit premier bord d'emballage (31) et dudit second bord d'emballage (31), dans lequel chaque feuille d'emballage (20) comprend au moins une couche d'âme intérieure de papier, de carton ou de polymère avec une construction en nid d'abeille, gaufrée ou ondulée (21), et au moins une feuille de couverture extérieure (22),
le pliage de ladite feuille d'emballage (20) autour du premier bord d'emballage (31) et du second bord d'emballage (31) dudit premier emballage (3), et
la fixation dudit second emballage (2) audit premier emballage (3).

2. Procédé selon la revendication 1, comprenant en outre l'étape de la fourniture d'une incision (26) dans ladite feuille d'emballage (20) agencée de façon opposée à une incision existante (36) dans ledit premier emballage (3).

3. Procédé selon l'une quelconque des revendications 1 ou 2, comprenant en outre l'étape de la fourniture d'un motif graphique (27) sur ladite feuille d'emballage (20).

4. Procédé selon l'une quelconque des revendications précédentes, dans lequel les étapes du pliage et de la fixation sont réalisées simultanément.

5. Procédé selon l'une quelconque des revendications précédentes, dans lequel l'étape de la fourniture du second emballage (2) comprend la fourniture d'une feuille d'emballage (20), avec au moins une partie d'extrémité (25), sur une face du premier emballage (3) et d'une autre feuille d'emballage (20), avec au moins une partie d'extrémité (25), sur une face opposée (32) du premier emballage (3), et dans lequel l'étape du pliage de la feuille d'emballages (20) comprend le pliage de la partie d'extrémité respective (25) de la feuille d'emballage (20) autour du bord (31) du premier emballage (3) de telle sorte que les parties d'extrémité (25) de l'une et de l'autre feuilles d'emballage (20) soient positionnées sur une face mutuelle (33) du premier emballage (3).

6. Procédé selon l'une quelconque des revendications précédentes, dans lequel l'étape de la fixation comprend l'attache en enroulant des moyens d'attache (6) autour de l'unité d'emballage (1) fournie par le second emballage (2) et le premier emballage (3) entourant le produit (4).

7. Procédé selon l'une quelconque des revendications précédentes, dans lequel au moins certaines des étapes de la fourniture du second emballage (2), du pliage de la feuille ou de feuilles d'emballage (20), et de la fixation du second emballage (2) au premier emballage (3) sont réalisées sur une structure de support (5) comprenant un substrat (51), et un ensemble de nervures (52) avec au moins un évidement (53, 54), de préférence comprenant également une plaque de butée (55) .

8. Procédé selon la revendication 7 lorsqu'elle dépend des revendications 5 et 6, dans lequel l'une feuille d'emballage (20) est placée sur l'ensemble de nervures (52), le produit (4) emballé dans le premier emballage (3) est placé sur l'une feuille d'emballage (20), l'autre feuille d'emballage (20) est placée sur une face supérieure (32) du premier emballage (3), les parties d'extrémité (25) sont pliées autour de bords respectifs (31) du premier emballage (3), et des moyens d'attache sous la forme de feuillards de cerclage (6) sont guidés à travers l'au moins un évidement (53, 54) dans les nervures (52) et enroulées autour de l'unité d'emballage.

9. Procédé selon la revendication 8, dans lequel l' ensemble de nervures comprend deux nervures (52), chaque nervure (52) étant pourvue d'un premier évidement (53) et d'un second évidement (54), et une plaque de butée (55) est prévue à des extrémités des deux nervures (52), les premier et second évidements (53, 54) étant prévus à des distances prédéfinies de la plaque de butée (55).

10. Procédé selon la revendication 9, dans lequel une pluralité d'ensembles de nervures (52) avec diverses longueurs est prévue pour s'adapter à une gamme de tailles du produit (4), et dans lequel les feuillards de cerclage (6) sont de préférence également prévus en diverses longueurs.

11. Unité d'emballage (1) pour un produit préassemblé (4), pour l'utilisation au niveau d'un toit, comprenant un premier emballage (3) ayant au moins un premier bord d'emballage (31) et un second bord d'emballage (31), et entourant le produit (4) et un second emballage (2) entourant le premier emballage (3), **caractérisée en ce que** le second emballage (2) comprend au moins une feuille d'emballage (20) ayant au moins une première rainure (24) et une seconde rainure (24) sur au moins un de ses côtés, ladite première rainure (24) et ladite seconde rainure (24) étant situées sur le côté opposé au premier emballage (3), agencées pour permettre le pliage de la feuille d'emballage (20) autour dudit premier bord d'emballage (31) et dudit second bord d'emballage (31) du premier emballage (3), dans lequel chaque feuille d'emballage (20) comprend au moins une couche d'âme intérieure de papier, de carton ou de polymère avec une construction en nid d'abeille, gaufrée ou ondulée (21), et au moins une feuille de couverture extérieure (22).

12. Unité d'emballage (1) selon la revendication 11, dans laquelle chaque feuille d'emballage (20) du second emballage (2) comprend une feuille continue monobloc capable de couvrir une surface plus grande que le premier emballage (3), deux rainures (24) étant de préférence prévues sur chaque feuille d'emballage pour fournir deux parties d'extrémité (25).

13. Unité d'emballage (1) selon la revendication 11 ou 12, dans laquelle chaque feuille d'emballage (20) comprend au moins une couche adhésive (23).

14. Unité d'emballage (1) selon l'une quelconque des revendications 11 à 13, comprenant un premier emballage (1) avec un produit préassemblé et pré-emballé, un second emballage (2) comprenant une et une autre feuilles d'emballage (20), chacune avec deux parties d'extrémité opposées (25), l'une feuille d'emballage (20) étant positionnée sur une face du premier emballage (3) et l'autre feuille d'emballage (20) étant positionnée sur une face opposée du premier emballage (3), les parties d'extrémité (25) étant pliées autour de bords respectifs (31) de telle sorte que des parties d'extrémité respectives (25) de l'une et de l'autre feuille d'emballage (20) soient positionnées sur une face mutuelle (33) du premier emballage (3), et dans laquelle des moyens d'attache (6), de préférence deux feuillards de cerclage (6), sont enroulées autour de l'unité d'emballage (1) .
